# EUROPEAN PATENT SPECIFICATION

(11) **EP 3 318 755 B1**
(45) Date of publication and mention of the grant of the patent: **07.11.2018**
(21) Application number: 17160588.4
(22) Date of filing: 13.03.2017
(51) Int. Cl.: F04B 17/02, F03C 1/04, F03C 1/26, F04B 51/00, F04B 53/16

(54) **HYDRAULIC MACHINE, WIND TURBINE POWER GENERATING APPARATUS, AND METHOD OF MAINTAINING HYDRAULIC MACHINE**
HYDRAULIKMASCHINE, WINDTURBINENSTROMERZEUGUNGSVORRICHTUNG UND VERFAHREN ZUR WARTUNG EINER HYDRAULIKMASCHINE
MACHINE HYDRAULIQUE, APPAREIL DE GÉNÉRATION D'ÉNERGIE ÉOLIENNE ET PROCÉDÉ DE MAINTIEN D'UNE MACHINE HYDRAULIQUE

(30) Priority: 04.11.2016 JP 2016216138
(43) Date of publication of application: 09.05.2018
(73) Proprietor: Mitsubishi Heavy Industries, Ltd., Tokyo 108-8215 (JP)
(72) Inventor: KAWABATA, Shinji, Tokyo, 108-8215 (JP); NOGUCHI, Toshihide, Tokyo, 108-8215 (JP)
(74) Representative: Henkel, Breuer & Partner

(56) References cited:
- EP-A1- 2 749 769
- EP-A1- 2 757 262
- WO-A1-2013/030874
- WO-A2-2011/104544

## Description

### TECHNICAL FIELD

The present invention relates to a hydraulic machine, a wind turbine power generating apparatus, and a method of maintaining a hydraulic machine, especially to a radial-piston type hydraulic machine and a method of maintaining the same.

### BACKGROUND ART

The following background will be described in relation to a hydraulic pump coupled to blades of a wind turbine power generating apparatus. However, the description can be also applied to other large hydraulic pumps for different types of renewable energy power generating apparatuses.

Typically, it is known to provide a large hydraulic pump as a hydraulic machine for a wind turbine power generating apparatus. Such a hydraulic pump is normally disposed inside a nacelle at a height. In such a wind turbine power generating apparatus, the hydraulic pump is coupled to turbine blades via a driving shaft (or via a gear box, selectively), and is connected to at least one hydraulic motor via a hydraulic circuit. The hydraulic motor drives a generator.

In many cases, it is difficult to perform maintenance on such a pump. This is because, firstly, a pump is large and heavy, and thus its maintenance requires a device that can lift a heavy object, such as a crane for moving a pump or components of the pump. Secondly, the pump is positioned at a height. In particular, an offshore wind turbine power generating apparatus installed on water can be accessed only by a boat or a helicopter, and thus maintenance is even more difficult.

With regard to maintainability of a hydraulic pump, JP 5509314 B discloses a hydraulic pump of radial-piston type to be applied to a wind turbine power generating apparatus. This hydraulic pump includes an outer ring formed of detachable and attachable blocks, and the blocks are individually removed outward in the radial direction, whereby it is possible to access and remove components of an inner ring such as ring cam segments or the like upon maintenance.

Further, JP 2014-515444 A discloses a hydraulic pump of a radial-piston type including an inner ring and an outer ring rotatable with respect to the inner ring. The outer ring includes detachable blocks including a plurality of piston cylinders, whereby it is possible to remove blocks from the outer ring by using a crane disposed above the pump.

Further, the hydraulic pump disclosed in WO 2014/002522 A includes a cylinder block including a plurality of cylinder block segments arranged in the circumferential direction of the hydraulic pump, and a ring cam including a plurality of cam segments arranged in the circumferential direction of the hydraulic pump. The document further discloses a component removal mechanism for removing the cylinder block segments outward in the radial direction.

EP 2757262 A1 discloses a hydraulic machine of a radial-piston type on which the preamble portion of claim 1 is based.

### SUMMARY

In a wind turbine power generating apparatus, a rotor part including blades tends to increase in size to improve power generation efficiency. As a result, the hydraulic pump also increases in size. On the other hand, a nacelle rotatably supported on a tower is required not to increase in its size, to curb manufacture costs, to improve responsiveness to a change in wind direction, and to improve wake effect. As a result, the hydraulic pump or the like occupies a greater proportion of space inside the nacelle, which makes it even more difficult to ensure a working space for maintenance.

Under such a condition, even with the configurations of JP 5509314 B, JP 2014-515444 A and WO 2014/002522 A, some of the detachable blocks disposed in different directions are still difficult to take out. Particularly, as a hydraulic pump occupies a larger space in a nacelle, workability upon replacement of components and maintenance deteriorates unless a sufficient space is ensured below the hydraulic pump, that is, between a lower part of the hydraulic pump and an inner wall surface (floor surface) of the nacelle on which the hydraulic pump is mounted.

Specifically, with the hydraulic pump disclosed in JP 5509314 B, it is inevitable to provide a sufficient distance between the hydraulic pump and the inner wall surface of the nacelle to remove a block positioned on the lower side in the circumferential direction outward in the radial direction. Thus, it is difficult to increase the size of the hydraulic pump while not increasing the size of the nacelle, while ensuring the maintenance workability.

With the hydraulic pump disclosed in JP 2014-515444 A, while it is possible to rotate the outer ring relative to the inner ring to remove a detachable block for maintenance outward in the radial direction at a desired position when the outer ring undergoes maintenance, the same problem as that in JP 5509314 B arises when the inner ring that does not rotate during shutdown of a wind turbine power generating apparatus undergoes maintenance (in particular, a lower portion of the inner ring in the circumferential direction).

The hydraulic pump of WO 2014/002522 A has the same problem when a lower portion in the circumferential direction undergoes maintenance. Further, when taking account of the weight of components each being a heavy object, friction between the components, and drag such as viscosity of lubricant oil, for instance, vertical removal is more workable than horizontal removal, when a block is taken out in the radial direction, and it is even more suitable if a worker can access a maintenance target from above when needed.

The present invention was made in view of the above, and an object of the present invention is to solve a technical problem upon maintenance on a large hydraulic pump disposed inside a wind turbine power generating apparatus or another renewable-energy type extraction apparatus.
(1) A hydraulic machine of a radial-piston type according to the present invention comprises the features of claim 1 including: a rotational shaft; a plurality of pistons disposed along a radial direction of the hydraulic machine around the rotational shaft; a cylinder block including a plurality of cylinders each configured to guide corresponding one of the plurality of pistons slidably along the radial direction; a casing supporting the cylinder block on a platform and being configured such that connection between the cylinder block and the casing is releasable; and a rotation permitting part for supporting the cylinder block rotatably relative to the casing. The cylinder block is configured to be rotatable about the rotational shaft and relative to the casing by the rotation permitting part, in a state in which the connection between the cylinder block and the casing is cancelled.

With the hydraulic machine described in the above (1), if connection between the cylinder block and the casing is canceled, the cylinder block becomes rotatable relative to the casing via the rotation permitting part. In this state, a rotational force in the circumferential direction is applied to the cylinder block, and thereby the cylinder block rotates about the rotational axis relative to the casing.

Accordingly, for instance, while the hydraulic machine is stopped, it is possible to rotate and move the cylinder block, which is a maintenance target, to a suitable position before removing the same. Thus, if the maintenance target is the cylinder block disposed on a lower position in the circumferential direction or a component inside thereof, it is possible to move the maintenance target aside or upward, for instance, before removing or repairing the same at the site. Accordingly, it is possible to shorten the distance between the hydraulic machine and the inner wall surface of the nacelle (in particular, the distance between the lower part of the hydraulic machine and the floor surface inside the nacelle) while ensuring workability of maintenance, which makes it possible to increase the size of the hydraulic machine while suppressing size increase of the nacelle.

Further, it is possible to rotate both the cylinder block and components disposed inside the cylinder block about the rotational axis relative to the casing, and thereby it is possible to rotate and move not only components disposed outside (e.g. the cylinder block), but also components disposed inside thereof, to a suitable position as needed upon maintenance, or to repair the same at the site.
(2) In some embodiments, in the hydraulic machine described in the above (1), the rotation permitting part includes a roller or a bearing disposed along a circumferential direction of the cylinder block or the casing, or a pair of gears including an outer gear disposed on an outer periphery of the cylinder block and an inner gear disposed on an inner peripheral side of the casing, the inner gear facing the outer gear and being engageable with the outer gear.

With the hydraulic machine described in the above (2), the rotation permitting part includes a roller or a bearing disposed along a circumferential direction of the cylinder block or the casing, or a pair of gears including an outer gear disposed on an outer periphery of the cylinder block and an inner gear disposed on an inner peripheral side of the casing, the inner gear facing the outer gear and being engageable with the outer gear, and thus it is possible to achieve the same effect as that of the hydraulic machine described in the above (1). Specifically, with a simple configuration of a roller or a bearing, or a pair of gears, it is possible to increase the size of the hydraulic machine while suppressing size increase of the nacelle, and to ensure maintainability of the hydraulic machine.
(3) In some embodiments, the hydraulic machine described in the above (1) or (2) further comprises a rotational-force applying part disposed on an outer peripheral surface of the cylinder block and configured to apply a force to rotate the cylinder block.

With the above configuration (3), it is possible to achieve the same effect as that of the hydraulic machine described in the above (1) or (2), and in addition, the rotational-force applying part is provided and thereby it is possible to apply a rotational force for rotating the cylinder block about the rotational axis via the rotational-force applying part. The rotational-force applying part may be supplied with a rotational force manually by a worker, for instance, or a tool or a device for applying a rotational force may be separately provided. Such a tool or a device may be incorporated into the hydraulic machine in advance, or may be prepared to be used in combination only during maintenance. Providing the rotational permitting part and the rotational-force applying part makes it possible to improve workability and to ensure maintainability even if the hydraulic machine is large in size.

(4) In some embodiments, the hydraulic machine described in any one of the above (1) to (3) further comprises: a plurality of high-pressure oil channels and a plurality of low-pressure oil channels formed inside the cylinder block so as to be in communication with respective working chambers formed by the plurality of cylinders and the plurality of pistons; and a plurality of low-pressure oil pipes or at least one low-pressure oil tank arranged in the circumferential direction at a radially outer side or a radially inner side of the cylinder block, so as to be in communication with the low-pressure oil channels inside the cylinder block. The cylinder block is configured to be exposed when the plurality of low-pressure oil pipes or the at least one low-pressure oil tank is removed.

With the hydraulic machine described in the above (4), it is possible to achieve the same effect as that of the hydraulic machine described in any one of the above (1) to (3), and in addition, the cylinder block can be exposed by removing the low-pressure oil pipe or the at least one low-pressure oil tank. Specifically, by removing the low-pressure oil pipes or the at least one low-pressure oil tank in advance, it is possible to rotate the cylinder block about the rotational axis to a suitable position relative to the casing.
(5) In some embodiments, the hydraulic machine described in the above (4) further comprises: a plurality of high-pressure valves disposed in the respective high-pressure oil channels; and a plurality of low-pressure valves disposed in the respective low-pressure oil channels. At least one of the plurality of high-pressure valves or the plurality of low-pressure valves is configured to be attachable and detachable in a state where the low-pressure oil pipes or the at least one low-pressure oil tank is removed.

With the hydraulic machine described in the above (5), it is possible to achieve the same effect as that of the hydraulic machine described in the above (4), and in addition, it is possible to attach and remove at least one of the plurality of high-pressure valves or the plurality of low-pressure valves as needed, while the low-pressure oil pipe or the at least one low-pressure oil tank is removed. Thus, it is possible to improve the maintenance workability even further.
(6) In some embodiments, in the hydraulic machine described in any one of the above (1) to (5), the cylinder block includes a plurality of cylinder block segments arranged in a circumferential direction of the hydraulic machine. The hydraulic machine includes a connection member for fixing the cylinder block segments to one another.

With the hydraulic machine described in the above (6), the connection member fixes the plurality of cylinder segments to one another. Accordingly, it is possible to connect adjacent cylinder block segments or all of the cylinder block segments in an arc shape or an annular shape, about the rotational axis. Thus, for instance, for being fixed by the connection member, the cylinder block segment can be removed upon maintenance or the like without falling and dropping when connection of the cylinder block and the casing is canceled. Further, it is possible to move the cylinder block segment to be removed to a workable position, that is, a lateral position or an upper position, before removing the same from the rotational shaft, which improves workability and ensures safety.
(7) In some embodiments, provided is a wind turbine power generating apparatus which generates power by utilizing wind, comprising: a rotor configured to receive wind and rotate; and the hydraulic machine described in any one of the above (1) to (6) which produces pressurized oil by utilizing rotation of the rotor.

With the wind turbine power generating apparatus described in the above (7), it is possible to provide a wind turbine power generating apparatus having the same effect as that of the hydraulic machine described in any one of the above (1) to (6).
(8) A method of performing maintenance on a hydraulic machine of a radial-piston type, according to the present invention comprises the features of claim 8 and is for a hydraulic machine comprising: a rotational shaft; a plurality of pistons disposed along a radial direction of the hydraulic machine around the rotational shaft; a cylinder block including a plurality of cylinders each configured to guide corresponding one of the plurality of pistons slidably along the radial direction; and a casing supporting the cylinder block on a platform and being configured such that connection between the cylinder block and the casing is releasable. The method comprises: a step of releasing the connection between the cylinder block and the casing; a step of rotating the cylinder block relative to the casing about the rotational shaft; and a step of performing maintenance on the hydraulic machine after rotating the cylinder block.

According to the method of performing maintenance on the hydraulic machine described in the above (8), it is possible to cancel connection between the cylinder block and the casing, rotate the cylinder block about the rotational axis relative to the casing, and rotate and move the cylinder block or the like, which is a maintenance target, to a desired position.

Accordingly, for instance, while the hydraulic machine is stopped, it is possible to rotate and move the cylinder block, which is a maintenance target, to a suitable position before removing the same. Thus, if the maintenance target is the cylinder block disposed on a lower position in the circumferential direction or a component inside thereof, it is possible to move the maintenance target aside or upward, for instance, before removing or repairing the same at the site. Accordingly, it is possible to shorten the distance between the hydraulic machine and the inner wall surface of the nacelle (in particular, the distance between the lower part of the hydraulic machine and the floor surface inside the nacelle) while ensuring workability of maintenance, which makes it possible to increase the size of the hydraulic machine while suppressing size increase of the nacelle.

Further, it is possible to rotate both the cylinder block and components disposed inside the cylinder block about the rotational axis relative to the casing, and thereby it is possible to rotate and move not only components disposed outside (e.g. the cylinder block), but also components disposed inside thereof, to a suitable position as needed upon maintenance, or to repair the same at the site.
(9) In some embodiments, in the method of performing maintenance on a hydraulic machine described in the above (8), the cylinder block includes a plurality of cylinder block segments arranged in a circumferential direction of the hydraulic machine, and the step of rotating includes rotating the cylinder block while the plurality of cylinder block segments are fixed and coupled to one another to form a ring shape.

According to the method of performing maintenance on a hydraulic machine described in the above (9), it is possible to achieve the same effect as that of the hydraulic machine described in any one of the above (8), and in addition, in the rotating step, the cylinder block is rotated while a plurality of cylinder block segments are fixed to one another and connected to form a ring shape. Thus, for instance, even if connection between the cylinder block and the casing is canceled in the disconnecting step, the cylinder block segments do not fall off accidentally. Thus, it is possible to perform works smoothly while ensuring safety until the maintenance target is moved to a suitable position.
(10) In some embodiments, in the above method of performing maintenance on a hydraulic machine according to the above (8) or (9), the hydraulic machine further comprises: a plurality of high-pressure oil channels and a plurality of low-pressure oil channels formed inside the cylinder block so as to be in communication with respective working chambers formed by the plurality of cylinders and the plurality of pistons, and a plurality of low-pressure oil pipes or at least one low-pressure oil tank arranged in a circumferential direction of the hydraulic machine at a radially outer side or a radially inner side of the cylinder block, so as to be in communication with the low-pressure oil channels inside the cylinder block. The method further comprises a step of removing the the low-pressure oil pipes or the low-pressure tank to expose the cylinder block. The cylinder block is rotated after the cylinder block is exposed.

According to the method of performing maintenance on a hydraulic machine described in the above (10), it is possible to achieve the same effect as that of the method of performing maintenance on the hydraulic machine described in the above (8) to (9), and in addition, the cylinder block can be exposed by removing the low-pressure oil pipe or at least one low-pressure oil tank. Specifically, by removing low-pressure oil pipes or at least one low-pressure oil tank in advance, it is possible to rotate the cylinder block about the rotational axis to a suitable position relative to the casing.
(11) In some embodiments, in the above method of performing maintenance on the hydraulic machine described in the above (10), the hydraulic machine includes a plurality of cam segments arranged in a circumferential direction of the rotational shaft. The cylinder block includes a plurality of cylinder block segments arranged in the circumferential direction of the hydraulic machine. The method comprises: a step of removing the low-pressure oil pipes or the low-pressure tank to expose the cylinder block; a step of taking out at least one of the plurality of cylinder block segments to expose the cam segments, after exposing the cylinder block; and a step of performing maintenance on the cam segments, after exposing the cam segments.

According to the method of performing maintenance on a hydraulic machine described in the above (11), it is possible to achieve the same effect as that of the method of performing maintenance on the hydraulic machine described in the above (10), and in addition, at least one of the plurality of cylinder block segments is taken out after the cylinder block including a plurality of cylinder block segments is exposed, thereby exposing the cam segment, and then the cam segment in an exposed state can undergo maintenance. The step of exposing the cam segment may be performed either before or after rotating the cylinder block, in accordance with the maintenance target portion.
(12) In some embodiments, in the above method of performing maintenance on the hydraulic machine described in the above (11), the cam segments are coupled to the rotational shaft with bolts. The method comprises a step of removing the cam segments from the casing by removing the bolts.

According to the method of performing maintenance on a hydraulic machine described in the above (12), it is possible to achieve the same effect as that of the method of performing maintenance on the hydraulic machine described in the above (11), and in addition, it is possible to remove the cam segment from the rotational shaft by removing the bolt, and thereby it is possible to perform maintenance only on the cam segment exposed at the site, to replace the cam segment, or to remove the cam segment and perform more extensive maintenance.
(13) In some embodiments, in the above method of performing maintenance on the hydraulic machine described in the any one of the above (8) to (12), the step of rotating comprises: coupling a rope or a wire to the cylinder block; and pulling the cylinder block in a substantially circumferential direction via the rope or the wire.

According to the method of performing maintenance on a hydraulic machine described in the above (13), it is possible to achieve the same effect as that of the method of performing maintenance on the hydraulic machine described in any one of the above (8) to (12), and in addition, in the step of rotating the cylinder block, a rope or a wire is connected to the cylinder block, and a rotational force in a substantially circumferential direction is applied to the cylinder block via the rope or wire connected to the cylinder block. Accordingly, it is possible to rotate the cylinder block about the rotational axis readily by a simple method.
(14) In some embodiments, in the above method of performing maintenance on the hydraulic machine described in the (13), the step of pulling comprises pulling the rope or the wire by using a winch, a crane, or a jack.

According to the method of performing maintenance on a hydraulic machine described in the above (14), it is possible to achieve the same effect as that of the method of performing maintenance on the hydraulic machine described in the above (13), and in addition, the rope or wire connected to the cylinder block may be pulled in a substantially circumferential direction by using the winch, crane, or jack. Accordingly, it is possible for a worker to rotate the cylinder block readily with a smaller force than in a case of the above (13).
(15) In some embodiments, in the above method of performing maintenance on the hydraulic machine described in the any one of the above (8) to (14), the step of rotating comprises applying a rotational force about the rotational shaft to the cylinder block by using a worm gear and a gear engageable with the worm gear.

According to the method of performing maintenance on a hydraulic machine described in the above (15), it is possible to achieve the same effect as that of the method of performing maintenance on the hydraulic machine described in any one of the above (8) to (14), and in addition, it is possible to rotate the worm gear to rotate the cylinder block via the gear in engagement with the worm gear. Furthermore, the installation space can be reduced, and the cylinder block can be rotated stably by a desired amount. Thus, it is possible to prevent accidental movement such as unintended excessive rotation and backward rotation, which enhances stability and safety of the step of rotating the cylinder block and improves maintainability.

According to at least one embodiment of the present invention, it is possible to solve a technical problem upon maintenance on a large hydraulic pump in a state of being disposed inside a wind turbine power generating apparatus or another renewable-energy type extraction apparatus.

### BRIEF DESCRIPTION OF DRAWINGS

FIG. 1 is a schematic diagram of a configuration example of a wind turbine power generating apparatus according to an embodiment of the present invention.
FIG. 2 is a schematic configuration diagram of a hydraulic pump being a hydraulic machine according to an embodiment of the present invention.
FIG. 3 is a diagram showing a part of a hydraulic pump being a hydraulic machine according to an embodiment of the present invention.
FIG. 4 is a partial cross-sectional view showing a configuration example of a hydraulic pump being a hydraulic machine according to an embodiment of the present invention.
FIG. 5 is a perspective view showing a configuration example of a hydraulic pump being a hydraulic machine according to an embodiment of the present invention.
FIGs. 6A and 6B are perspective diagrams of a rotation permitting part according to an embodiment of the present invention.
FIGs. 7A to 7F are diagrams for describing a maintenance method for a hydraulic machine according to an embodiment of the present invention.

### DETAILED DESCRIPTION

Embodiments of the present invention will now be described with reference to the accompanying drawings. It is intended, however, that unless particularly specified, dimensions, materials, shapes, relative positions and the like of components described in the embodiments shall be interpreted as illustrative only and not intended to limit the scope of the present invention unless particularly specified.

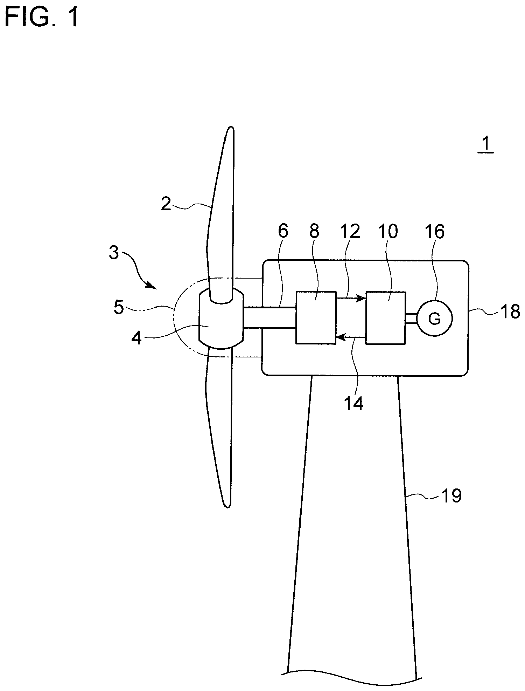

FIG. 1 is a schematic diagram of a configuration example of a wind turbine power generating apparatus according to an embodiment of the present invention.

As depicted in the drawing, a wind turbine power generating apparatus 1 generates power upon receiving wind, and includes a rotor 3 including at least one blade 2 and a hub 4, that rotates upon receiving wind, and a hydraulic pump 8 being a hydraulic machine that generates pressurized oil by utilizing rotation of the rotor 3. The hub 4 may be covered with a hub cover 5.

In an embodiment, the hydraulic pump 8 is coupled to the rotor 3 via a main shaft 6, which is a rotational shaft. A hydraulic motor 10 is connected to the hydraulic pump 8 via a plurality of high-pressure oil lines 12 and a plurality of low-pressure oil lines 14. Specifically, an outlet of the hydraulic pump 8 is connected to an inlet of the hydraulic motor 10 via the high-pressure oil line 12, and an inlet of the hydraulic pump 8 is connected to an outlet of the hydraulic motor 10 via the low-pressure oil line 14. The hydraulic pump 8 is driven by rotation of the main shaft 6 to pressurize working oil, thereby producing high-pressure working oil (pressurized oil). The pressurized oil produced by the hydraulic pump 8 is supplied to the hydraulic motor 10 via the high-pressure oil line 12, and drives the hydraulic motor 10. The low-pressure working oil having performed work in the hydraulic motor 10 is returned again to the hydraulic pump 8 via the low-pressure oil line 14 disposed between the outlet of the hydraulic motor 10 and the inlet of the hydraulic pump 8.

A generator 16 is connected to the hydraulic motor 10. In an embodiment, the generator 16 is a synchronous generator connected to a utility grid and driven by the hydraulic motor 10. The generator 16 is not limited to a synchronous generator.

At least a part of the main shaft 6 is covered with a nacelle 18 disposed on a tower 19. In an embodiment, the hydraulic pump 8, the hydraulic motor 10, and the generator 16 are disposed inside the nacelle 18.

In some embodiments, the hydraulic pump 8 is a radial-piston type hydraulic pump described below.

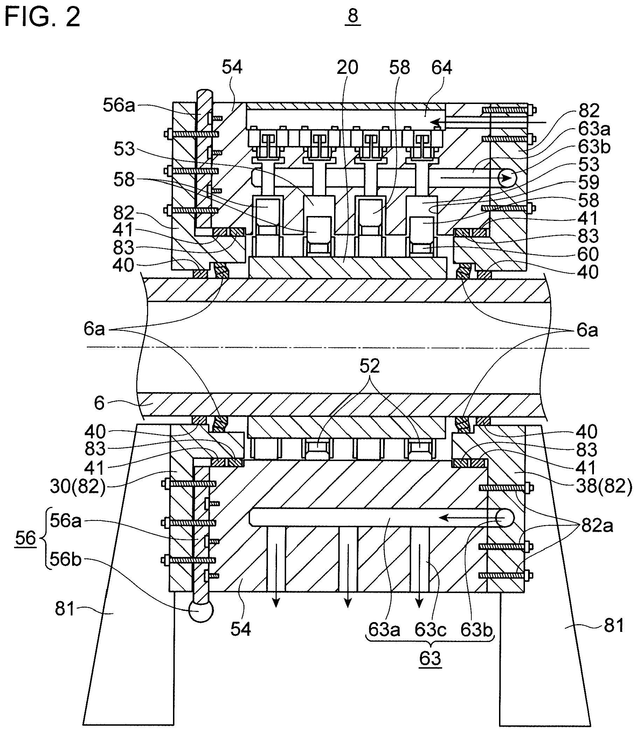

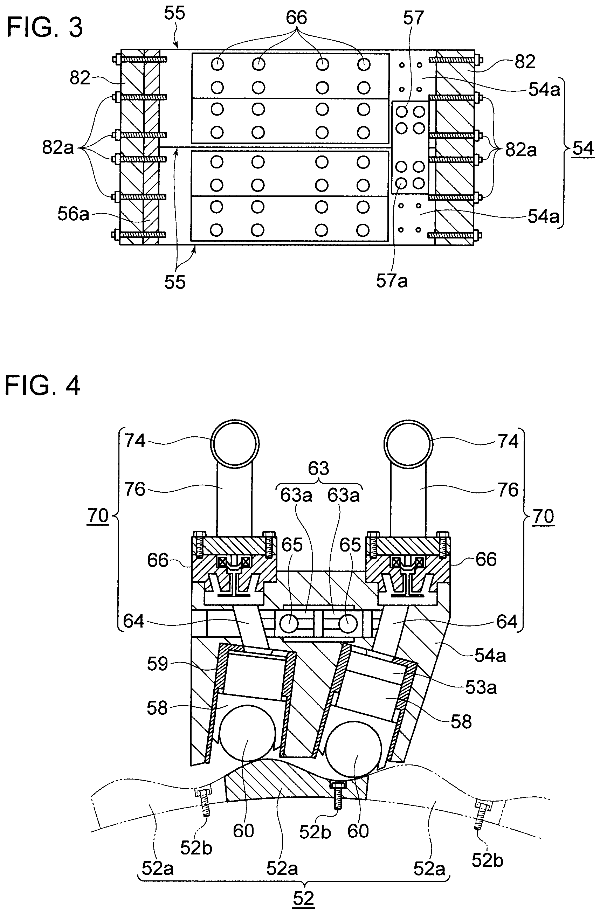

FIG. 2 is a schematic configuration diagram of the hydraulic pump 8 according to an embodiment of the present invention. FIG. 3 is a diagram showing a part of a hydraulic pump according to an embodiment of the present invention. FIG. 4 is a partial cross-sectional view showing a configuration example of a hydraulic pump being a hydraulic machine according to an embodiment of the present invention.

In the illustrative embodiment depicted in the drawings, the hydraulic pump 8 includes a pump shaft 20 being a rotational shaft that rotates with the main shaft 6, a plurality of pistons 58 disposed along the radial direction of the pump shaft 20, a cylinder block 54 including a plurality of cylinders 59 for holding the respective pistons 58 slidably along the radial direction of the hydraulic pump 8, a first end plate 30 and a second end plate 38 supporting the cylinder block 54 on the platform 81 and being a casing detachably connected to the cylinder block 54, and a rotation permitting part 83 for rotatably supporting the cylinder block 54 on the first end plate 30 and the second end plate 38.

In an illustrative embodiment, the hydraulic pump 8 includes main bearings 6a rotatably supporting the main shaft 6 about an axis at front and rear of the main shaft 6 in the axial direction, and a seal 40 sealing clearance between the main shaft 6 and the casing 82. That is, the main shaft 6 is supported inside the nacelle 18 via the pair of main bearings 6a, 6a disposed at front and rear in the axial direction, the hydraulic pump 8 having the bearings 6a, 6a, and a support mechanism (e.g. the platform 81) of the hydraulic pump. The configuration of the hydraulic pump 8 being a hydraulic machine according to an embodiment of the present invention is not limited to this, and a rotational shaft for a hydraulic pump that rotates with the main shaft 6 may be provided separately.

In the present embodiment, the pump shaft 20 is mounted to be integrally rotatable with the main shaft 6, around the main shaft 6. The main shaft 6 and the pump shaft 20 are coupled in a way that is not particularly limited as long as torques can be transmitted reliably, such as shrink fit and spline coupling.

A plurality of pistons 58 is arranged in a radial fashion on the outer side, in the radial direction, of a ring cam 52. A roller 60 to be in contact with a cam surface of the ring cam 52 is mounted to an end portion of each piston 58. The piston 58 is configured to be capable of reciprocating along the radial direction of the hydraulic pump 8 while being guided by the cylinder 59. When the piston 58 reciprocates in the cylinder 59, the volume of a working chamber 53 formed by the piston 58 and the cylinder 59 changes cyclically. The mode of motion is converted between such reciprocating motion of the piston 58 accompanied by the cyclic volume change of the working chamber and the rotational motion of the hydraulic pump 8. Specifically, rotational motion of the ring cam 52 rotating with the rotational shaft 28 of the hydraulic pump 8 is converted into reciprocating motion of the pistons 58, so that the cyclic volume change of the working chambers 53 takes place and high-pressure working oil (pressurized oil) is produced in the working chambers 53.

The ring cam 52 is fixed to the outer periphery of the pump shaft 20. The ring cam 52 has a cam surface formed in a continuous wavy shape along the circumferential direction of the pump shaft 20, and is disposed in an annular shape so as to surround the entire periphery of the pump shaft 20. A plurality of ring cams 52 may be disposed in the axial direction of the pump shaft 20 (hereinafter, merely referred to as the axial direction). The ring cam 52 is not limited to one having a cam surface of a wavy shape, but may have a cam surface of an eccentric cam which has a single cam surface with the center of the ring cam 52 being offset from the center position of the shaft. Further, the ring cam 52 is divided in the circumferential direction of the pump shaft 20 so as to be attachable and detachable in the radial direction of the hydraulic pump 8 (pump shaft 20) (see FIG. 4). That is, the ring cam 52 includes a plurality of cam segments (ring cam segments) 52a disposed in the circumferential direction. The cam segments 52a are coupled to the pump shaft 20 with bolts 52b, and it is possible to detach the cam segments 52a from the pump shaft 20 by removing the bolts 52b, and to take the cam segments 52a out from a casing including the first and second end plates 30, 38. The ring cam 52 including the plurality of ring cam segments 52a may be directly mounted to the outer periphery of the main shaft 6.

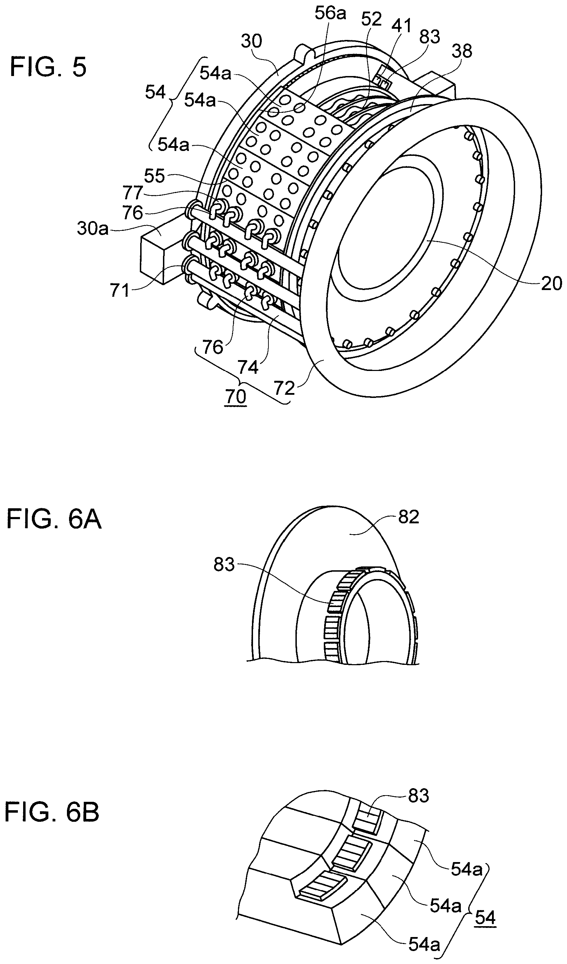

The cylinder block 54 is disposed on the outer side of the ring cam 52 in the radial direction and arranged so as to extend in an annular shape over the entire circumference of the pump shaft 20. Inside the cylinder block 54, formed are cylinders 59, as well a high-pressure oil channel 63a and a low-pressure oil channel 64 communicating with the working chambers 53 in the cylinders 59. Further, the cylinder block 54 is divided in the circumferential direction of the pump shaft 20 at a divisional surface 55 so as to be attachable and detachable in the radial direction from the hydraulic pump 8 (see FIG. 5). That is, the cylinder block 54 includes a plurality of cylinder block segments 54a disposed in the circumferential direction of the hydraulic pump 8. In this case, for each one of the cylinder block segments 54a, a plurality of sets may be arranged in the axial direction and the circumferential direction of the hydraulic pump 8, each set including a cylinder 59, a high-pressure oil channel 63a, and a low-pressure oil channel 64.

As depicted in FIG. 4, the high-pressure valve 65 is disposed in the high-pressure oil channel 63a, so that the high-pressure oil channel 63a communicates with the high-pressure oil line 12 (see FIG. 1) when the high-pressure valve 65 opens. The low-pressure valve 66 is disposed in the low-pressure oil channel 64, so that the low-pressure oil channel 64 communicates with the low-pressure oil pipe 76 (branch pipe) when the low-pressure valve 66 opens.

Further, in an embodiment, as depicted in FIG. 4, the length of a cylinder block segment 54a in the circumferential direction is longer than the length of a cam segment 52a in the circumferential direction covered with the cylinder block segment 54a. Accordingly, by removing at least one cylinder block segment 54a, it is possible to expose at least one cam segment 52a being covered with the at least one cylinder segment 54a for the sake of maintenance. Further, by removing the exposed cam segment 52a, it is possible to replace and repair the cam segment 52a readily. Maintenance mentioned herein includes repairing, fixing, replacing, and checking. It will be understood that the removed cylinder block 54 itself can also undergo maintenance.

Accordingly, with the above hydraulic pump 8, only a necessary portion can be taken out or exposed upon maintenance without removing the entire cylinder block 54 or the entire ring cam 52, which makes it possible to save efforts and time for removing components and to improve workability in maintenance. Further, since it is possible to perform maintenance partially on the hydraulic pump 8, maintenance works can be performed even when only a narrow space is available.

The first end plate 30 and the second end plate 38 are disposed on both ends of the cylinder block 54 in the axial direction of the hydraulic pump 8. The first end plate 30 is disposed so as to block an end portion of the cylinder block 54 on the side adjacent to the hub 4. The second end plate 38 is disposed so as to block an end portion of the cylinder block further from the hub 4.

The first end plate 30 may be provided with a torque arm 30a supported to the nacelle 18 side, in order to receive a torque of the hydraulic pump 8. The torque arm 30a supports the hydraulic pump 8 on the nacelle 18 side via a nacelle base plate and the platform 81 disposed inside the nacelle 18. The first end plate 30 and the second end plate 38 are positioned so as to face each other across the cylinder block 54, and are each detachably fixed to the cylinder block 54 with a plurality of tie bolts 82a disposed in the circumferential direction along the axial direction. Further, each cylinder block segment 54a may be fixed to the first end plate 30 and the second end plate 38 with a radial-directional bolt (not depicted) inserted in the radial direction of the hydraulic pump 8.

The piping configuration of the hydraulic motor 8 will now be described.

The hydraulic pump 8 includes a high-pressure oil channel group (plurality of high-pressure oil channels) 63 for sending high-pressure oil to the high-pressure oil line 12 from the working chambers 53, and a low-pressure oil channel group (plurality of low-pressure oil channels) 70 for supplying low-pressure oil to the working chambers 53 from the low-pressure oil line 14.

The high-pressure oil channel group 63 includes high-pressure oil channels 63a formed in the cylinder block segment 54a, a high-pressure manifold (high-pressure annular collecting passage) 63b formed in the second end plate 38, and a high-pressure oil pipe 63c connected to the cylinder block 54 disposed on a lower position of the cylinder block 54. The lower position is, for instance, a clock position from 4 o'clock to 8 o'clock as seen in the axial direction (the clock face is upright and perpendicular to the axial direction). In the present embodiment, the high-pressure oil pipe 63c is formed in the cylinder block 54 at the 6 o'clock position (lowermost position). The high-pressure oil channel 63a is provided so as to connect the working chambers 53 of each cylinder block segment 54a, to the high-pressure manifold 63b of the second end plate 38. A high-pressure valve 65 is disposed on the inlet side of each working chamber 53. The respective high-pressure oil channels 63a of the plurality of cylinder block segments 54a are connected to the high-pressure manifold 63b, so that high-pressure oil flowing through each high-pressure oil channel 63a is collected by the high-pressure manifold 63b. The high-pressure oil pipe 63c is flange-connected to the second end plate 38, for instance, and sends high-pressure oil discharged from the high-pressure manifold 63b to the high-pressure oil line 12. The high-pressure oil pipe 63c may be regarded as a part of the high-pressure oil line 12.

The low-pressure oil channel group 70 includes a low-pressure oil channel 64 formed in the cylinder block segment 54a, low-pressure oil pipes 74, 76 or a low-pressure oil tank (not depicted) disposed radially outside the cylinder block segment 54a, and a low-pressure manifold (low-pressure annular collecting passage) 72. The low-pressure oil channel 64 is provided so as to connect the working chamber 53 of each cylinder block segment 54a, to the low-pressure oil pipes 74, 76. A low-pressure valve 66 is disposed on the inlet side of each working chamber 53. The low-pressure oil pipes 74, 76 include a branch pipe 76 extending in the radial direction of the hydraulic pump 8 and connected to the low-pressure oil channel 64, and a main pipe 74 extending in the axial direction of the hydraulic pump 8, to which a plurality of branch pipes 76 is connected. The main pipe 74 is connected to a low-pressure manifold 72. The low-pressure manifold 72 is formed in an annular shape along the outer periphery of the hydraulic pump 8, and a plurality of main pipes 74 is connected to the low-pressure manifold 72. The low-pressure oil line 14 is connected to the low-pressure manifold 72. The low-pressure oil pipes 74, 76 may be disposed on any one of the radially outer side and the radially inner side of the cylinder block 54.

In an embodiment, a flange 77 is disposed on an end portion of each of the plurality of branch pipes 76, and the flange 77 is bolt-fastened to an outer peripheral surface of the cylinder block segment 54a, whereby each branch pipe 76 is connected to the cylinder block segment 54a. In this case, a flange (not depicted) may be formed also on the other end portion of the branch pipe 76, and coupled to a flange (not depicted) disposed on the main pipe 74. With this configuration, only the branch pipe 76 can be removed from the hydraulic pump 8. Further, the main pipe 74 may include a flange 71 disposed on an end portion of the main pipe 74, and may be coupled to the low-pressure manifold 72 with bolts. With this configuration, it is possible to take out the branch pipe 76 and the main pipe 74 as a group from the hydraulic pump 8, at the sections of the flange 77 of the branch pipe 76 and of the flange 71 of the main pipe 74. Each flange may be provided with a seal such as an O-ring, to prevent leakage of low-pressure oil.

Further, in another embodiment, a seal member 41 may be provided to seal clearance between the first end plate 30 and the cylinder block segment 54a, clearance between a pair of adjacent cylinder block segments 54a, and clearance between the cylinder block segment54a and the second end plate 38.

With this configuration, in an embodiment, the cylinder block 54 becomes exposed when the low-pressure oil pipes 74, 76 or at least one low-pressure oil tank is removed. Further, at least one of the high-pressure valve 65 or the low-pressure valve 66 is configured to be attachable and detachable while the low-pressure oil pipes 74, 76 or at least one low-pressure oil tank is removed.

In some embodiments, adjacent cylinder block segments 54a are connected to each other by a connection plate 57 serving as a connection member described below. Specifically, an attachment part, such as bolt holes and attachment grooves, may be formed on the outer periphery of each cylinder block segment 54a, for attaching the connection plate 57 in an annular shape at the outer peripheral side of the cylinder block 54. In FIG. 3, the connection plate 57 is attached to an end portion farther from the hub 4, that is, on the side of the second end plate 38. However, the configuration is not limited to this, and the connection plate 57 may be disposed on an end portion on the side of the first end plate 30 closer to the hub 4.

In some embodiments, the hydraulic pump 8 includes a connection plate 57 for fixing the plurality of cylinder block segments 54a to each other (see FIG. 3). Specifically, adjacent cylinder block segments 54a are connected to each other by the connection plate 57 in at least a part of the outer peripheral side of the cylinder block segments 54a.

The connection plate 57 is a long plate member made of metal, for instance. A plurality of connection plates 57 is provided so that the longitudinal direction of the connection plates 57 is along the outer periphery of the cylinder blocks 54. The connection plates 57 are disposed so that the longitudinal direction thereof is substantially along the circumferential direction of the cylinder block 54 disposed in an annular shape, and so that one of the connection plates 57 connects at least two adjacent cylinder block segments 54a to each other. Each connection plate 57 is fastened to the outer peripheral side of the adjacent cylinder block segments 54a by corresponding bolts 57a so as to be attachable and detachable. The fixing unit for fixing the connection plates 57 and each cylinder block segment 54a is not limited to the bolts 57a, and only needs to be capable of reliably connecting at least the adjacent cylinder block segments 54a, and to have such a strength that none of the cylinder block segments 54a falls off during rotation about a rotational axis of the cylinder block segments 54a when all of the cylinder block segments 54 are connected to form the cylinder block 54 in an annular shape.

With the connection plates 57 connecting the cylinder block segments 54a, the cylinder block segments 54a arranged in an annular shape are connected to form the cylinder block 54 of an annular shape integrally while being individually connectable or separatable.

Next, the rotation permitting part 83 of the present embodiment will be described in detail.

The rotation permitting part 83 enables relative rotation of the cylinder block 54 and the casing 82 about the main shaft 6 (rotational shaft) while connection between the cylinder block 54 and the casing 82 is canceled, and is disposed along the circumferential direction of the cylinder block 54 or the casing 82.

Specifically, the rotation permitting part 83 permits rotation of the cylinder block 54 relative to the casing 82 about the main shaft 6, while tie bolts 82a, connection units for connecting the cylinder block 54 (or each cylinder block segment 54a) and the casing 82 (the first end plate 30 and the second end plate 38), are all removed and the connection therebetween is canceled entirely.

In the present embodiment, "the connection is canceled" means that nothing limits relative movement of the cylinder block 54 and the casing 82 about the rotational axis, including a condition in which connection by the tie bolts 82a therebetween is canceled, and if a unit other than the tie bolts 82a is provided to connect the cylinder block 54 and the casing 82, a condition in which connection of the other unit and the tie bolts is entirely disconnected.

In the present embodiment, the rotation permitting part 83 comprises a bearing member disposed on the radially inner side of an end portion, in the axial direction, of each cylinder block segment 54a (see FIG. 6B). In another embodiment, the rotation permitting part 83 may be disposed on a surface that faces the cylinder block 54, on an end portion, in the axial direction, of the casing 82, the surface being disposed on the outer periphery of the support part that receives loads of the cylinder block 54 (see FIG. 6A).

The bearing member may include, for instance, various anti-friction units that enable relative movement of the cylinder block 54 and the casing 82 about the rotational shaft, such as endless rollers including a plurality of rollers arranged parallel to form an endless track, like Toughrollers (Japanese registered trademark), and rollers or bearings such as axle bearing rollers.

Further, in some embodiments, the rotation permitting part 83 may include a pair of gears (not depicted) including an outer gear disposed on the outer periphery of the cylinder block 54, and an inner gear disposed on the inner periphery of the casing 82 so as to face the outer gear and formed to engage with the outer gear. In this case, for instance, the pair of gears may be a planetary gear mechanism with a plurality of gears interposed between the pair of gears.

Further, in some embodiments, the hydraulic pump 8 further includes a rotational-force applying part 56 disposed on the outer peripheral surface of the cylinder block 54 and configured to apply a force to rotate the cylinder block 54 about the rotational axis. In FIGs. 2 and 3, the rotational-force applying part 56 is attached to an end portion of the cylinder block segment 54a closer to the hub 4, that is, on the side of the first end plate 30. However, the configuration is not limited to this, and the rotational-force applying part 56 may be disposed on an end portion on the side of the second end plate 38, further from the hub 4.

The rotational-force applying part 56 applies a rotational force about the rotational axis by pulling the cylinder block 54 in a substantially circumferential direction via a rope or a wire 56d connected to the cylinder block 54.

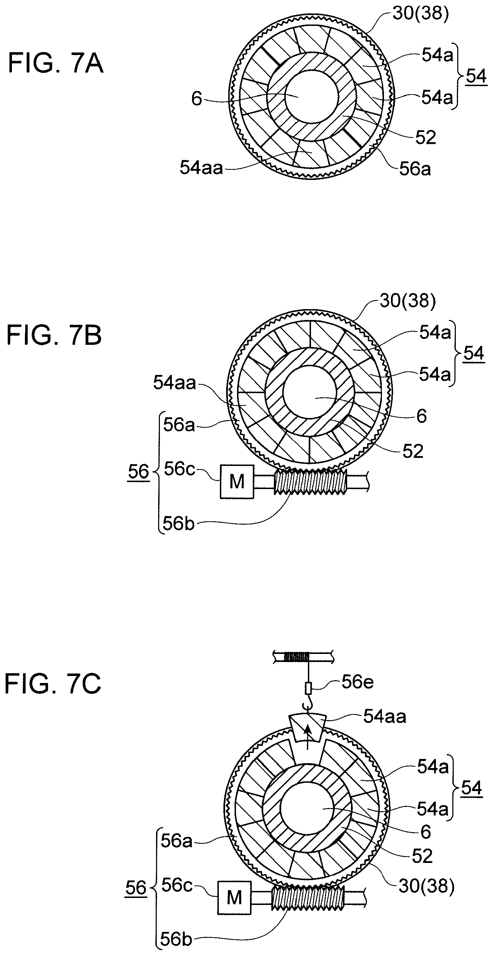

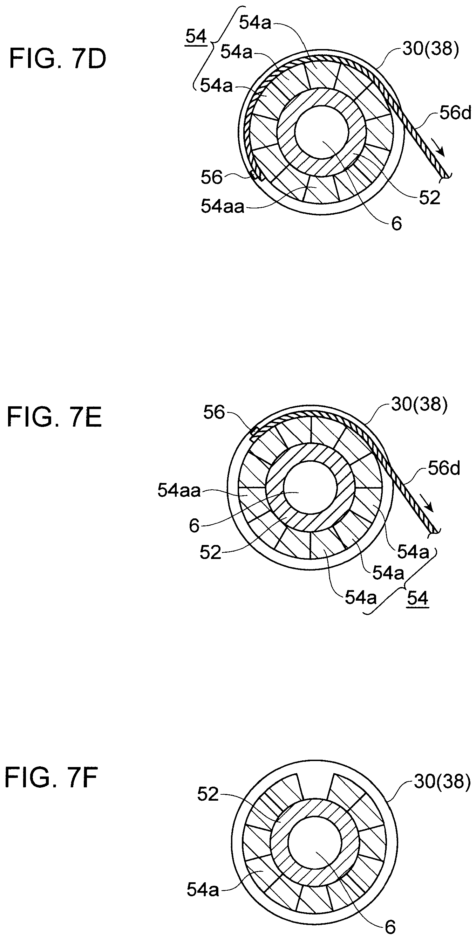

The rotational-force applying part 56 includes, for instance, a worm wheel 56a, and a worm gear 56b applies a rotational force to the worm wheel 56a. The worm gear 56b is rotated by a motor 56c, for instance (see FIGs. 2, 7B, 7C, etc.)

The worm wheel 56a is a gear to be engaged with the warm gear 56b. The worm wheel 56a only needs to be able to apply (transmit) a rotational force about the rotational axis to the cylinder block 54 in response to an input of a rotational force by the worm gear 56b, and may be a spur wheel.

Furthermore, the rotational-force applying part 56 may be a protruding portion or the like that receives an input of a rotational force inputted by pulling the protruding portion via a wire or a rope (see FIGs. 7D and 7E).

In some embodiments, a rotational force may be applied to the rotational-force applying part 56, namely the worm wheel 56a or a protruding portion, by using a winch 56e (FIG. 7C), a crane, or a jack to pull the rope or the wire 56d.

A shim or the like may be interposed between the cylinder block 54 and the casing 82.

Next, with reference to FIGs. 7A to 7F, a maintenance method for the hydraulic machine 8 according to the present embodiment will be described. In the example described herein, the maintenance target is a ring cam segment 52a. The maintenance target may be a component other than the ring cam segment 52a, such as the cylinder block segment 54a, the low-pressure valve 66, and the high-pressure valve 65, and not particularly limited as long as the target is a constituent component of the hydraulic pump 8.

A maintenance method of the hydraulic pump 8 according to the present embodiment includes canceling connection between the cylinder block 54 and the casing 82, rotating the cylinder block 54 about the rotational axis relative to the casing 82, and performing maintenance on the hydraulic pump 8.

In the step of releasing connection, the tie bolts 82a are entirely removed.

In the step of rotating the cylinder block 54, the cylinder block 54 may be rotated while a plurality of cylinder block segments 54a are fixed to each other by the connection plates 57 and connected to form a ring shape. Accordingly, the maintenance target or the cylinder block segment 54a adjacent thereto does not fall out and drop.

The cylinder block 54 may be rotated after removing the low-pressure oil pipes 74, 76 or the low-pressure tank to expose the cylinder block 54.

At least one of the plurality of cylinder block segments 54a may be taken out to expose the cam segments 52a, after the cylinder block 54 is exposed by removing the low-pressure oil pipes 74, 76 or the low-pressure tank, and then the cam segment 52a may undergo maintenance.

The cam segment 52a may be removed from the rotational shaft such as the pump shaft 20 and the main shaft 6, and thus from the casing 82, by removing the bolts 52b.

In the step of rotating the cylinder block 54, a rope or a wire 56d may be connected to the cylinder block 54, and the cylinder block 54 may be pulled in a substantially circumferential direction via the rope or the wire 56d.

Further, in the step of rotating the cylinder block 54, a rotational force about the rotational axis may be applied to the cylinder block by using the worm gear 56b and the worm wheel 56a engaging with the worm gear 56b.

In the step of pulling, the rope or the wire 56d may be pulled by using a winch 56e, a crane, or a jack.

The low-pressure oil pipes 74, 76 in a position corresponding to that of the ring cam segment 52a to undergo maintenance are removed. Specifically, the low-pressure oil pipes 74, 76 in a circumferential-directional position corresponding to that of the ring cam segment 52a to undergo maintenance are removed from the cylinder block segment 54a. For instance, bolts of the flanges 77 of the plurality of branch pipes 76 connected to one cylinder block segment 54a are removed, and the flange 71 of the main pipe 74 to which the branch pipes 76 are connected is removed. Accordingly, it is possible to access the cylinder block segment 54a without removing all of the low-pressure oil pipes 74, 76. That is, a space is partially formed by removing at least one group (including one or more low-pressure oil pipe 74, 76) corresponding to the maintenance-target position, and it is possible to access the cylinder block segment 54a through the space, which makes it possible to improve efficiency of maintenance works, and to reduce work time. Further, since fewer parts are to be removed, it is possible to perform maintenance works readily even in a narrow space.

The low-pressure oil pipes 74, 76 or the low-pressure oil tank is removed to expose the cylinder block 54 (cylinder block segment 54a) covering the ring cam segment 52a to undergo maintenance.

The cylinder block segment 54a has a longer length in the circumferential direction than the ring cam segment 52a, and thereby the ring cam segment 52a, the maintenance target, can be entirely exposed to outside by removing the cylinder block segment 54a. Thus, it is possible to access the ring cam segment 52a readily. The ring cam segment 52a may be kept mounted to the pump shaft 20 while being repaired, or may be removed from the hydraulic pump 8 to be repaired outside, or to be replaced with a fresh ring cam segment 52a.

Further, in another configuration example, in a case where the maintenance target is the low-pressure valve 66, the low-pressure valve 66 is configured to be attachable and detachable from the cylinder block segment 54a. Accordingly, it is possible to access the low-pressure valve 66 via the low-pressure oil channel 64 by merely removing the low-pressure oil pipes 74, 76, which makes it possible to replace the low-pressure valve 66 readily. A low-pressure valve normally comprises a solenoid valve, in case of which frequent maintenance is required. In this context, a readily detachable valve improves maintenance workability even further. Further, the high-pressure valve 65 may have the same configuration. Further, the cylinder block segment 54a itself may be the maintenance target, in case of which the cylinder block segment 54a is removed from the hydraulic pump 8 after removing the low-pressure oil pipes 74, 76, and then maintenance is performed on the cylinder block segment 54a.

In the illustrative embodiment, if connection between the cylinder block 54 and the casing 82 is canceled, the cylinder block 54 becomes rotatable relative to the casing 82 via the rotation permitting part 83. In this state, a rotational force in the circumferential direction is applied to the cylinder block 54, and thereby the cylinder block 54 rotates about the rotational axis (the main shaft 6 and the pump shaft 20, the same shall apply hereinafter) relative to the casing 82.

Accordingly, for instance, while the hydraulic pump 8 is stopped, it is possible to rotate and move the cylinder block 54aa to undergo maintenance to a suitable position before removing the same. Thus, if the maintenance target is the cylinder block 54 disposed on a lower position in the circumferential direction or a component inside thereof (the cam segment 52a, the cylinders 59, the high-pressure valves 65, the pistons 58 or the like, the same shall apply hereinafter), it is possible to move the maintenance target aside or upward, for instance, to remove or repair the same at the site. Accordingly, it is possible to shorten the distance between the hydraulic pump 8 and the inner wall surface of the nacelle 18 (in particular, the distance between the lower part of the hydraulic pump 8 and the floor surface inside the nacelle 18) while ensuring workability of maintenance, which makes it possible to increase the size of the hydraulic pump 8 while suppressing a size increase of the nacelle 18.

Further, it is possible to rotate both the cylinder block 54 and components disposed inside the cylinder block 54 about the rotational axis relative to the casing 82, and thereby it is possible to rotate and move not only components disposed outside (e.g. the cylinder block 54), but also components disposed inside thereof, to a suitable position as needed upon maintenance, or to repair the same at the site.

Further, the hydraulic pump 8 according to an illustrative embodiment has a simple configuration including a roller or a bearing disposed along the circumferential direction of the cylinder block 54 or the casing 82, or a pair of gears including an outer gear disposed on the outer periphery of the cylinder block 54 and an inner gear disposed on the inner periphery of the casing 82 to face the outer gear and configured to be in engagement with the outer gear, whereby it is possible to increase the size of the hydraulic pump 8 while suppressing size increase of the nacelle 18, and to ensure maintainability of the hydraulic pump 8.

Further, the hydraulic pump 8 according to the illustrative embodiment includes the rotational-force applying part 45, and thus it is possible to apply a rotational force for rotating the cylinder block 54 about the rotational axis via the rotational-force applying part 56. The rotational-force applying part 56 may be supplied with a rotational force manually by a worker, for instance, or a tool or a device (the worm gear 56b, the motor 56c, the wire (rope) 56d, winch, crane, jack) for applying a rotational force may be separately provided. Such a tool or a device may be incorporated into the hydraulic pump 8 in advance, or may be prepared to be used in combination only during maintenance. Moreover, the casing 82 and the cylinder block 54 are connected mainly by the tie bolts 82a so that the connection is releasable, and the rotational permitting part 83 and the rotational-force applying part 56 are provided, which makes it possible to improve workability and to ensure maintainability even if the hydraulic pump 8 is large in size.

Further, the cylinder block 54 is exposed by removing the low-pressure oil pipes 74, 76 or at least one low-pressure oil tank. Specifically, by removing low-pressure oil pipes 74, 76 or at least one low-pressure oil tank in advance, it is possible to rotate the cylinder block 54 about the rotational axis to a suitable position relative to the casing 82.

Further, it is possible to attach and detach at least one of the high-pressure valve 65 or the low-pressure valve 66 as needed while the low-pressure oil pipes 74, 76 or at least one low-pressure oil tank is removed. Thus, it is possible to improve the maintenance workability even further.

Further, the connection plates 57 fix the plurality of cylinder segments 54a to one another. Accordingly, it is possible to connect adjacent cylinder block segments 54a or all of the cylinder block segments 54a in an arc shape or an annular shape, about the rotational axis. Thus, for instance, for being fixed by the connection plates 57, the cylinder block segment 54a can be removed upon maintenance or the like without falling and dropping when connection of the cylinder block 54 and the casing 82 is canceled. Further, it is possible to move the cylinder block segment 54a to be removed to a workable position, that is, a lateral position or an upper position, before removing the same from the rotational shaft, which improves workability and ensures safety.

Further, according to an illustrative embodiment, it is possible to provide a wind turbine power generating apparatus having the above advantageous effect.

Furthermore, according to a maintenance method of the hydraulic pump 8 in an illustrative embodiment, it is possible to cancel connection between the cylinder block 54 and the casing 82, rotate the cylinder block 54 about the rotational axis relative to the casing 82, and rotate and move the cylinder block 54 or the like, which is a maintenance target, to a desired position.

Accordingly, for instance, while the hydraulic machine is stopped, it is possible to rotate and move the cylinder block 54, which is a maintenance target, to a suitable position before removing the same. Thus, if the maintenance target is the cylinder block 54 disposed on a lower position in the circumferential direction or a component inside thereof, it is possible to move the maintenance target aside or upward, for instance, and remove or repair the same at the site. Accordingly, it is possible to shorten the distance between the hydraulic pump 8 and the inner wall surface of the nacelle 18 (in particular, the distance between the lower part of the hydraulic pump 8 and the floor surface inside the nacelle 18) while ensuring workability of maintenance, which makes it possible to increase the size of the hydraulic pump 8 while suppressing a size increase of the nacelle 18.

Further, it is possible to rotate both the cylinder block 54 and components disposed inside the cylinder block 54 about the rotational axis relative to the casing 82, and thereby it is possible to rotate and move not only components disposed outside (e.g. the cylinder block 54), but also components disposed inside thereof, to a suitable position as needed upon maintenance, or to repair the same at the site.

Further, in the step of rotating the cylinder block 54, the cylinder block 54 is rotated while a plurality of cylinder block segments 54a are fixed to one another and connected to form a ring shape. Thus, for instance, even if connection between the cylinder block 54 and the casing 82 is canceled in the disconnecting step, the cylinder block segments 54a do not fall off accidentally. Thus, it is possible to perform works smoothly while ensuring safety until the maintenance target is moved to a suitable position.

Further, the cylinder block 54 is exposed outside by removing the low-pressure oil pipes 74, 76 or at least one low-pressure oil tank, and thereby it is possible to rotate the cylinder block 54 about the rotational axis to a suitable position relative to the casing 82 after removing the low-pressure oil pipes 74, 76 or at least one low-pressure oil tank.

At least one of the plurality of cylinder block segments 54a is taken out after the cylinder block 54 including a plurality of cylinder block segments 54a is exposed, thereby exposing the cam segment 52a, and then the cam segment 52a in an exposed state can undergo maintenance. The step of exposing the cam segment 52a may be performed either before or after rotating the cylinder block 54, in accordance with the maintenance target portion.

Further, it is possible to remove the cam segment 52a from the rotational shaft by removing the bolt 52b, and thereby it is possible to perform maintenance only on the cam segment 52a exposed at the site, to replace the cam segment 52a, or to remove the cam segment 52a and perform more extensive maintenance.

In the step of rotating the cylinder block 54, a rope or a wire 56d is connected to the cylinder block 54, and a rotational force in a substantially circumferential direction is applied to the cylinder block 54 via the rope or wire 56d connected to the cylinder block 54. Accordingly, it is possible to rotate the cylinder block 54 about the rotational axis readily by a simple method.

Further, the rope or wire 56d connected to the cylinder block 54 may be pulled in a substantially circumferential direction by using the winch 56e, crane, or jack. Accordingly, it is possible to rotate the cylinder block 54 readily with a smaller force.

Further, it is possible to rotate the worm gear 56b to rotate the cylinder block 54 via a gear in engagement with the worm gear 56b. Furthermore, the installation space can be reduced, and the cylinder block 54 can be rotated stably by a desired amount. Thus, it is possible to prevent accidental movement such as unintended excessive rotation and backward rotation, which enhances stability and safety of the step of rotating the cylinder block 54 and improves maintainability.

Furthermore, the cylinder block segment 54a can be disconnected from the casing 82 and rotated about the rotational axis, even in a case where a sufficient space for maintenance cannot be ensured below or beside the hydraulic pump 8 in the radial direction. Thus, a relatively larger space is ensured above the hydraulic pump 8, which makes it possible to remove and perform maintenance on the cylinder block segment 54a readily from above. Further, it is possible to rotate the worm gear 56b to rotate the cylinder block 54 by using the worm gear 56b as a gear. Furthermore, the installation space can be reduced, and the cylinder block 54 can be rotated stably by a desired amount. Thus, it is possible to prevent accidental movement such as excessive rotation due to inertia and unintended backward rotation, which enhances stability of rotation of the cylinder block 54 and improves maintainability.

Embodiments of the present invention were described in detail above, but the present invention is not limited thereto, and various amendments and modifications may be implemented within a scope that does not depart from the present invention.

For instance, while the above embodiment describes the hydraulic pump 8 for the hydraulic transmission of the wind turbine power generating apparatus 1, usage of the hydraulic pump 8 is not limited to wind turbine power generating apparatuses, and may be for another purpose.

Further, while the above embodiment describes the hydraulic pump 8 of a radial-piston type as an example of a hydraulic machine according to an embodiment of the present invention, the hydraulic machine is not limited to the hydraulic pump, and may be applied to a hydraulic motor or the like.

For instance, in the above embodiment, two rows of branch pipes 76 arranged adjacent in the circumferential direction of the hydraulic pump 8 are connected to one main pipe 74, but one row of branch pipes 76 may be connected to one main pipe 74. Specifically, one branch pipe 76 lined in the axial direction of the hydraulic pump 8 may be connected to one main pipe 74. In this case, two main pipes 74 are removed to expose one cylinder block segment 54a.

Further, instead of the low-pressure oil pipes 74, 76, a plurality of low-pressure oil tanks may be arranged in the circumferential direction of the hydraulic pump 8. The low-pressure oil tank is in communication with the plurality of low-pressure oil channels 64. For instance, a plurality of low-pressure oil channels 64 formed on one cylinder block segment 54a may be connected to one low-pressure oil tank. The low-pressure oil tank is connected to the low-pressure manifold 72 via piping. Further, the low-pressure oil tank is configured to be attachable and detachable to and from the cylinder block segments 54a and the low-pressure manifold 72. In this case, at least one low-pressure oil tank is to be removed to expose one cylinder block segment 54a.

Further, although the low-pressure oil pipes 74, 76 or the low-pressure oil tank is exposed inside the in-nacelle space in the above described embodiment, a casing for covering the outer peripheral side of the low-pressure oil pipes 74, 76 or the low-pressure oil tank may be provided to reduce noise.

## Claims

1. A hydraulic machine (8) of a radial-piston type, comprising:
a rotational shaft (20);
a plurality of pistons (58) disposed along a radial direction of the hydraulic machine (8) around the rotational shaft (20);
a cylinder block (54) including a plurality of cylinders (59) each configured to guide corresponding one of the plurality of pistons (58) slidably along the radial direction; and
a casing (82) including a pair of endplates (30,38) supporting the cylinder block (54) on a platform (81) and being configured such that connection between the cylinder block (54) and the casing (82) including the pair of endplates (30,38) is releasable;
**characterized in that**
the hydraulic machine (8) further comprises a rotation permitting part (83) for supporting the cylinder block (54) rotatably relative to the casing (82) including the pair of endplates (30,38),
wherein the cylinder block (54) is configured to be rotatable about the rotational shaft (20) and relative to the casing (82) including the pair of endplates (30,38) by the rotation permitting part (83), in a state in which the connection between the cylinder block (54) and the casing (82) including the pair of endplates (30,38) is cancelled.

2. The hydraulic machine (8) according to claim 1,
wherein the rotation permitting part (83) includes a roller or a bearing disposed along a circumferential direction of the cylinder block (54) or the casing (82) including the pair of endplates (30,38), or a pair of gears including an outer gear disposed on an outer periphery of the cylinder block (54) and an inner gear disposed on an inner peripheral side of the casing (82) including the pair of endplates (30, 38), the inner gear facing the outer gear and being engageable with the outer gear.

3. The hydraulic machine (8) according to claim 1 or 2, further comprising a rotational-force applying part (56) disposed on an outer peripheral surface of the cylinder block (54) and configured to apply a force to rotate the cylinder block (54).

4. The hydraulic machine (8) according to any one of claims 1 to 3, further comprising:
a plurality of high-pressure oil channels (63) and a plurality of low-pressure oil channels (64) formed inside the cylinder block (54) so as to be in communication with respective working chambers (53) formed by the plurality of cylinders (59) and the plurality of pistons (58); and
a plurality of low-pressure oil pipes (74, 76) or at least one low-pressure oil tank arranged in the circumferential direction at a radially outer side or a radially inner side of the cylinder block (54), so as to be in communication with the low-pressure oil channels (64) inside the cylinder block (54),
wherein the cylinder block (54) is configured to be exposed when the plurality of low-pressure oil pipes (74, 76) or the at least one low-pressure oil tank is removed.

5. The hydraulic machine (8) according to claim 4, further comprising:
a plurality of high-pressure valves (65) disposed in the respective high-pressure oil channels (63); and
a plurality of low-pressure valves (66) disposed in the respective low-pressure oil channels (64),
wherein at least one of the plurality of high-pressure valves (65) or the plurality of low-pressure valves (66) is configured to be attachable and detachable in a state where the low-pressure oil pipes (74, 76) or the at least one low-pressure oil tank is removed.

6. The hydraulic machine (8) according to any one of claims 1 to 5,
wherein the cylinder block (54) includes a plurality of cylinder block segments (54a) arranged in a circumferential direction of the hydraulic machine (8), and
wherein the hydraulic machine (8) includes a connection member (57) for fixing the cylinder block segments (54a) to one another.

7. A wind turbine power generating apparatus (1) which is configured to generate power by utilizing wind, comprising:
a rotor (3) configured to receive wind and rotate; and
the hydraulic machine (8) according to any one of claims 1 to 6 which is arranged to produce pressurized oil by utilizing rotation of the rotor (3).

8. A method of performing maintenance on a hydraulic machine (8) of a radial-piston type, the hydraulic machine (8) comprising:
a rotational shaft (20);
a plurality of pistons (58) disposed along a radial direction of the hydraulic machine (8) around the rotational shaft (20);
a cylinder block (54) including a plurality of cylinders (59) each configured to guide corresponding one of the plurality of pistons (58) slidably along the radial direction; and
a casing (82) including a pair of endplates (30, 38) supporting the cylinder block (54) on a platform (81) and being configured such that connection between the cylinder block (54) and the casing (82) including the pair of endplates (30, 38) is releasable,
the method comprising:
a step of releasing the connection between the cylinder block (54) and the casing (82) including the pair of endplates (30, 38);
a step of rotating the cylinder block (54) relative to the casing (82) including the pair of endplates (30, 38) about the rotational shaft (20), wherein the cylinder block is supported by a rotation permitting part (83) for supporting the cylinder block (54) rotatably relative to the casing (82) including the pair of endplates (30, 38); and
a step of performing maintenance on the hydraulic machine (8) after rotating the cylinder block (54).

9. The method of performing maintenance on a hydraulic machine (8) according to claim 8,
wherein the cylinder block (54) includes a plurality of cylinder block segments (54a) arranged in a circumferential direction of the hydraulic machine (8), and
wherein the step of rotating includes rotating the cylinder block (54) while the plurality of cylinder block segments (54a) are fixed and coupled to one another to form a ring shape.

10. The method of performing maintenance on a hydraulic machine (8) according to claim 8 or 9,
wherein the hydraulic machine (8) further comprises:
a plurality of high-pressure oil channels (63) and a plurality of low-pressure oil channels (64) formed inside the cylinder block (54) so as to be in communication with respective working chambers (53) formed by the plurality of cylinders (59) and the plurality of pistons (58), and
a plurality of low-pressure oil pipes (74, 76) or at least one low-pressure oil tank arranged in the circumferential direction at a radially outer side or a radially inner side of the cylinder block (54), so as to be in communication with the low-pressure oil channels (64) inside the cylinder block (54),
wherein the method further comprises a step of removing the low-pressure oil pipes (74, 76) or the low-pressure tank to expose the cylinder block (54), and
wherein the cylinder block (54) is rotated after the cylinder block (54) is exposed.

11. The method of performing maintenance on a hydraulic machine (8) according to claim 10,
wherein the hydraulic machine (8) includes a plurality of cam segments (52a) arranged in a circumferential direction of the rotational shaft (20),
wherein the cylinder block (54) includes a plurality of cylinder block segments (54a) arranged in the circumferential direction of the hydraulic machine (8), and
wherein the method comprises:
a step of taking out at least one of the plurality of cylinder block segments (54a) to expose the cam segments (52a), after exposing the cylinder block (54); and
a step of performing maintenance on the cam segments (52a), after exposing the cam segments (52a).

12. The method of performing maintenance on a hydraulic machine (8) according to claim 11,
wherein the cam segments (52a) are coupled to the rotational shaft (20) with bolts (52b), and
wherein the method comprises a step of removing the cam segments (52a) from the casing (82) including the pair of endplates (30, 38) by removing the bolts (52b).

13. The method of performing maintenance on a hydraulic machine (8) according to any one of claims 8 to 12,
wherein the step of rotating comprises:
coupling a rope or a wire (56d) to the cylinder block (54); and
pulling the cylinder block (54) in a substantially circumferential direction via the rope or the wire (56d).

14. The method of performing maintenance on a hydraulic machine (8) according to claim 13,
wherein the step of pulling comprises pulling the rope or the wire (56d) by using a winch (56e), a crane, or a jack.

15. The method of performing maintenance on a hydraulic machine (8) according to any one of claims 8 to 14,
wherein the step of rotating comprises applying a rotational force about the rotational shaft (20) to the cylinder block (54) by using a worm gear (56b) and a gear (56a) engageable with the worm gear (56b).

## Patentansprüche

1. Eine Hydraulikmaschine (8) eines Radialkolbentyps mit:
einer Rotationswelle (20),
einer Vielzahl von Kolben (58), die entlang einer Radialrichtung der Hydraulikmaschine (8) um die Rotationswelle (20) herum angeordnet sind,
einem Zylinderblock (54), der eine Vielzahl von Zylindern (59) umfasst, wobei jeder ausgestaltet ist, um einen zugehörigen der Vielzahl von Kolben (58) gleitend entlang der Radialrichtung zu führen, und
einem Gehäuse (82), das ein Paar von Endplatten (30, 38) umfasst, welche den Zylinderblock (54) auf einer Plattform (81) tragen und so ausgestaltet sind, dass eine Verbindung zwischen dem Zylinderblock (54) und dem Gehäuse (82), welches das Paar von Endplatten (30, 38) umfasst, lösbar ist,
**dadurch gekennzeichnet, dass**
die Hydraulikmaschine (8) ferner ein Teil zum Ermöglichen einer Rotation (83) zum Tragen des Zylinderblocks (54) relativ rotierbar zu dem Gehäuse (82), welches das Paar von Endplatten (30, 38) umfasst, aufweist,
wobei der Zylinderblock (54) ausgestaltet ist, um um die Rotationswelle (20) und relativ zu dem Gehäuse (82), welches das Paar von Endplatten (30, 38) umfasst, durch das Rotationsgestattungsteil (83) rotierbar zu sein, in einem Zustand, bei dem die Verbindung zwischen dem Zylinderblock (54) und dem Gehäuse (82), welches das Paar von Endplatten (30,38) umfasst, aufgehoben ist.

2. Die Hydraulikmaschine (8) gemäß Anspruch 1,
wobei das Teil zum Ermöglichen einer Rotation (83) einen Wälzkörper oder ein Lager aufweist, der/das entlang einer Umfangsrichtung des Zylinderblocks (54) oder des Gehäuses (82), welches das Paar von Endplatten (30, 38) umfasst, angeordnet ist, oder ein Paar von Zahnrädern aufweist, welches ein äußeres Zahnrad, das an einem Außenumfang des Zylinderblocks (54) angeordnet ist, und ein inneres Zahnrad, das an einer Innenumfangsseite des Gehäuses (82), welches das Paar von Endplatten (30, 38) umfasst, angeordnet ist, umfasst, wobei das innere Zahnrad dem äußeren Zahnrad zugewandt ist und mit dem äußeren Zahnrad im Eingriff bringbar ist.

3. Die Hydraulikmaschine (8) gemäß Anspruch 1 oder 2, ferner mit einem Rotationskraft-Anwendungsteil (56), das an einer Außenumfangsoberfläche des Zylinderblocks (54) angeordnet ist und ausgestaltet ist, um eine Kraft auszuüben, um den Zylinderblock (54) zu rotieren.

4. Die Hydraulikmaschine (8) gemäß einem der Ansprüche 1 bis 3, ferner mit:
einer Vielzahl von Hochdruckölkanälen (63) und einer Vielzahl von Niederdruckölkanälen (64), die innerhalb des Zylinderblocks (54) so ausgebildet sind, dass sie mit jeweiligen Arbeitskammern (53), die durch die Vielzahl von Zylindern (59) und die Vielzahl von Kolben (58) gebildet sind, in Verbindung stehen, und
einer Vielzahl von Niederdruckölrohrleitungen (74, 76) oder zumindest einem Niederdrucköltank, die/der in der Umfangsrichtung an einer radialen Außenseite oder einer radialen Innenseite des Zylinderblocks (54) angeordnet sind/ist, sodass sie/er mit den Niederdruckölkanälen (64) innerhalb des Zylinderblocks (54) in Verbindung stehen/steht,
wobei der Zylinderblock (54) ausgestaltet ist, um freizuliegen, wenn die Vielzahl von Niederdruckölrohren (74,76) oder der zumindest eine Niederdrucköltank entfernt werden/wird.

5. Die Hydraulikmaschine (8) gemäß Anspruch 4, ferner mit:
einer Vielzahl von Hochdruckventilen (65), die in den jeweiligen Hochdruckölkanälen (63) angeordnet sind, und
einer Vielzahl von Niederdruckölventilen (66), die in den jeweiligen Niederdruckkanälen (64) angeordnet sind,
wobei zumindest eines der Vielzahl von Hochdruckventilen (65) oder der Vielzahl von Niederdruckventilen (66) ausgestaltet ist, um in einem Zustand, bei dem die Niederdruckölrohrleitungen (74, 76) oder der zumindest eine Niederdrucköltank entfernt werden/wird, anbringbar und abnehmbar zu sein.

6. Die Hydraulikmaschine (8) gemäß einem der Ansprüche 1 bis 5,
wobei der Zylinderblock (54) eine Vielzahl von Zylinderblocksegmenten (54a) umfasst, die in einer Umfangsrichtung der Hydraulikmaschine (8) angeordnet sind, und
wobei die Hydraulikmaschine (8) ein Verbindungselement (57) zum Fixieren bzw. Befestigen der Zylinderblocksegmente (54a) aneinander umfasst.

7. Eine Windturbinen-Energieerzeugungsvorrichtung (1), die ausgestaltet ist, um Energie durch Nutzung von Wind zu erzeugen, mit:
einem Rotor (3), der ausgestaltet ist, um Wind zu empfangen und zu rotieren, und
der Hydraulikmaschine (8) gemäß einem der Ansprüche 1 bis 6, die angeordnet ist, um Drucköl durch Nutzung der Rotation des Rotors (3) zu erzeugen.

8. Ein Verfahren zum Ausführen einer Instandhaltung an einer Hydraulikmaschine (8) eines Radialkolbentyps, wobei die Hydraulikmaschine (8) umfasst:
eine Rotationswelle (20),
eine Vielzahl von Kolben (58), die entlang einer Radialrichtung der Hydraulikmaschine (8) um die Rotationswelle (20) herum angeordnet sind,
einen Zylinderblock (54), der eine Vielzahl von Zylindern (59) umfasst, wobei jeder ausgestaltet ist, um einen zugehörigen der Vielzahl von Kolben (58) gleitend entlang der Radialrichtung zu führen, und
ein Gehäuse (82), das ein Paar von Endplatten (30, 38), die den Zylinderblock (54) auf einer Plattform (81) tragen, und so ausgestaltet sind, das eine Verbindung zwischen dem Zylinderblock (54) und dem Gehäuse (82), welches das Paar von Endplatten (30, 38) umfasst, lösbar ist, umfasst,
wobei das Verfahren umfasst:
einen Schritt zum Lösen der Verbindung zwischen dem Zylinderblock (54) und dem Gehäuse (82), welches das Paar von Endplatten (30, 38) umfasst,
einen Schritt zum Rotieren des Zylinderblocks (54) relativ zu dem Gehäuse (82), welches das Paar von Endplatten (30,38) umfasst, um die Rotationswelle (20), wobei der Zylinderblock durch ein Teil zum Ermöglichen einer Rotation (83) zum Tragen des Zylinderblocks (54) zu dem Gehäuse (82), welches das Paar von Endplatten (30, 38) umfasst, relativ rotierbar, getragen wird, und
einen Schritt zum Ausführen einer Instandhaltung an der Hydraulikmaschine (8) nach einem Rotieren des Zylinderblocks (54).

9. Das Verfahren zum Ausführen einer Instandhaltung an einer Hydraulikmaschine (8) gemäß Anspruch 8,
wobei der Zylinderblock (54) eine Vielzahl von Zylinderblocksegmenten (54a) umfasst, welche in einer Umfangsrichtung der Hydraulikmaschine (8) angeordnet sind, und
wobei der Schritt des Rotierens ein Rotieren des Zylinderblocks (54) umfasst, während die Vielzahl von Zylinderblocksegmenten (54a) fixiert und miteinander gekoppelt sind, um eine Ringform zu bilden.

10. Das Verfahren zum Ausführen einer Instandhaltung an einer Hydraulikmaschine (8) gemäß Anspruch 8 oder 9,
wobei die Hydraulikmaschine (8) ferner umfasst:
eine Vielzahl von Hochdruckölkanälen (63) und eine Vielzahl von Niederdruckölkanälen (64), die innerhalb des Zylinderblocks (54) so ausgebildet sind, dass sie mit jeweiligen Arbeitskammern (53), die durch die Vielzahl von Zylindern (59) und die Vielzahl von Kolben (58) gebildet sind, in Verbindung stehen, und
eine Vielzahl von Niederdruckölrohrleitungen (74, 76) oder zumindest einen Niederdrucköltank, die/der in der Umfangsrichtung an einer radialen Außenseite oder einer radialen Innenseite des Zylinderblocks (54) angeordnet sind/ist, sodass sie/er mit den Niederdruckölkanälen (64) innerhalb des Zylinderblocks (54) in Verbindung stehen/steht,
wobei das Verfahren ferner einen Schritt eines Entfernens der Niederdruckölrohrleitungen (74, 76) oder des Niederdrucktanks umfasst, um den Zylinderblock (54) freizulegen, und
wobei der Zylinderblock (54) rotiert wird, nachdem der Zylinderblock (54) freigelegt ist.

11. Das Verfahren zum Ausführen einer Instandhaltung an einer Hydraulikmaschine (8) gemäß Anspruch 10,
wobei die Hydraulikmaschine (8) eine Vielzahl von Nockensegmenten (52a) umfasst, die in einer Umfangsrichtung der Rotationswelle (20) angeordnet sind,
wobei der Zylinderblock (54) eine Vielzahl von Zylinderblocksegmenten (54a) umfasst, die in der Umfangsrichtung der Hydraulikmaschine (8) angeordnet sind, und
wobei das Verfahren umfasst:
einen Schritt eines Herausnehmens von zumindest einem der Vielzahl von Zylinderblocksegmenten (54a), um die Nockensegmente (52a) freizulegen, nach dem Freilegen des Zylinderblocks (54), und
einen Schritt des Ausführens einer Instandhaltung an den Nockensegmenten (52a) nach dem Freilegen der Nockensegmente (52a).

12. Das Verfahren zum Ausführen einer Instandhaltung an einer Hydraulikmaschine (8) gemäß Anspruch 11,
wobei die Nockensegmente (52a) mit der Rotationswelle (20) mit Bolzen (52b) gekoppelt sind, und
wobei das Verfahren einen Schritt eines Entfernens der Nockensegmente (52a) aus dem Gehäuse (82), welches das Paar von Endplatten (30, 38) umfasst, durch Entfernen der Bolzen (52b) umfasst.

13. Das Verfahren zum Ausführen einer Instandhaltung an einer Hydraulikmaschine (8) gemäß einem der Ansprüche 8 bis 12,
wobei der Schritt des Rotierens umfasst:
Koppeln eines Seils oder eines Kabels (56d) mit dem Zylinderblock (54), und
Ziehen des Zylinderblocks (54) in einer im Wesentlichen Umfangsrichtung durch das Seil oder das Kabel (56d).

14. Das Verfahren zum Ausführen einer Instandhaltung an einer Hydraulikmaschine (8) gemäß Anspruch 13,
wobei der Schritt des Ziehens ein Ziehen des Seils oder des Kabels (56d) unter Verwendung einer Winde (56e), eines Krans oder eines Hebers umfasst.

15. Das Verfahren zum Ausführen einer Instandhaltung an einer Hydraulikmaschine (8) gemäß einem der Ansprüche 8 bis 14,
wobei der Schritt des Rotierens ein Ausüben einer Rotationskraft um die Rotationswelle (20) auf den Zylinderblock (54) unter Verwendung eines Schneckenrads (56b) und eines Zahnrads (56a), das mit dem Schneckenrad (56b) in Eingriff bringbar ist, umfasst.

## Revendications

1. Machine (8) hydraulique d'un type à piston radial, comprenant :
un arbre (20) rotatif ;
une pluralité de pistons (58) disposés suivant une direction radiale de la machine (8) hydraulique autour de l'arbre (20) rotatif ;
un bloc-cylindre (54), comprenant une pluralité de cylindres (59), chacun configuré pour guider l'un correspondant de la pluralité de pistons (58) à coulissement dans la direction radiale et
une enveloppe (82), comprenant une paire de flasques (30, 38) supportant le bloc-cylindre (54) sur une plateforme (81) et configurée de manière à ce qu'une liaison entre le bloc-cylindre (54) et l'enveloppe (82) comprenant la paire de flasques (30, 38) puisse être défaite ;
**caractérisée en ce que**
la machine (8) hydraulique comprend, en outre, une partie (83) permettant une rotation pour supporter le bloc-cylindre (54) à rotation par rapport à l'enveloppe (82) comprenant la paire de flasques (30, 38),
le bloc-cylindre (54) étant configuré pour pouvoir tourner autour de l'arbre (20) rotatif et par rapport à l'enveloppe comprenant la paire de flasques (30, 38) par la partie (83) permettant une rotation, dans un état dans lequel la liaison entre le bloc-cylindre (54) et l'enveloppe (82) comprenant la paire de flasques (30, 38) est supprimée.

2. Machine (8) hydraulique suivant la revendication 1,
dans laquelle la partie (83) permettant une rotation comprend un galet ou un palier disposé dans la direction circonférentielle du bloc-cylindre (54) ou de l'enveloppe (82) comprenant la paire de flasques (30, 38), ou une paire d'engrenages comprenant un engrenage extérieur disposé sur une périphérie extérieure du bloc-cylindre (54) et un engrenage intérieur disposé sur un côté périphérique intérieur de l'enveloppe (82) comprenant la paire de flasques (30, 38), l'engrenage intérieur faisant face à l'engrenage extérieur et pouvant engrener avec l'engrenage extérieur.

3. Machine (8) hydraulique suivant la revendication 1 ou 2, comprenant, en outre, une partie (56) d'application d'une force de rotation disposée sur une surface périphérique extérieure du bloc-cylindre (54) et configurée pour appliquer une force pour faire tourner le bloc-cylindre (54).

4. Machine (8) hydraulique suivant l'une quelconque des revendications 1 à 3, comprenant, en outre :
une pluralité de canaux (63) pour de l'huile sous haute pression et une pluralité de canaux (64) pour de l'huile sous basse pression formés à l'intérieur du bloc-cylindre (54), de manière à être en communication avec des chambres (53) de travail respectives formées par la pluralité de cylindres (59) et la pluralité de pistons (58) et
une pluralité de conduits (74, 76) pour de l'huile sous basse pression ou au moins une cuve à huile sous basse pression disposée dans la direction circonférentielle d'un côté extérieur radialement ou d'un côté intérieur radialement du bloc-cylindre (54), de manière à être en communication avec les canaux (64) pour de l'huile sous basse pression à l'intérieur du bloc-cylindre (54),
dans laquelle le bloc-cylindre (54) est configuré pour être à découvert, lorsque la pluralité de conduits (74, 76) pour de l'huile sous basse pression ou la au moins une cuve à huile sous basse pression est retirée.

5. Machine (8) hydraulique suivant la revendication 4, comprenant, en outre :
une pluralité de soupapes (65) de haute pression montées dans les canaux (63) pour de l'huile sous haute pression respectifs et
une pluralité de soupapes (66) de basse pression montées dans les canaux (64) pour de l'huile sous basse pression respectifs,
dans laquelle au moins l'une de la pluralité de soupapes (65) de haute pression de la pluralité de soupapes (66) de basse pression est configurée pour pouvoir être montée et démontée dans un état où les conduits (74, 76) pour de l'huile sous basse pression ou la au moins une cuve à huile sous basse pression est retirée.

6. Machine (8) hydraulique suivant l'une quelconque des revendications 1 à 5,
dans laquelle le bloc-cylindre (54) comprend une pluralité de segments (54a) de bloc-cylindre disposés dans une direction circonférentielle de la machine (8) hydraulique et
dans laquelle la machine (8) hydraulique comprend un élément (57) de liaison pour fixer les segments (54a) de bloc-cylindre les uns aux autres.

7. Installation (1) de production d'électricité par éolienne, qui est configurée pour produire de l'électricité en utilisant du vent, comprenant :
un rotor (3) configuré pour recevoir du vent et tourner et
la machine (8) hydraulique suivant l'une quelconque des revendications 1 à 6, qui est agencée pour produire de l'huile sous pression en utilisant une rotation du rotor (3).

8. Procédé pour effectuer un entretien sur une machine (8) hydraulique du type à piston radial, la machine (8) hydraulique comprenant :
un arbre (20) rotatif ;
une pluralité de pistons (58) disposés suivant une direction radiale de la machine (8) hydraulique autour de l'arbre (20) rotatif ;
un bloc-cylindre (54), comprenant une pluralité de cylindres (59), chacun configuré pour guider l'un correspondant de la pluralité de pistons (58) à coulissement dans la direction radiale et
une enveloppe (82), comprenant une paire de flasques (30, 38) supportant le bloc-cylindre (54) sur une plateforme (81) et configurée de manière à ce qu'une liaison entre le bloc-cylindre (54) et l'enveloppe (82) comprenant la paire de flasques (30, 38) puisse être défaite ;
le procédé comprenant :
un stade où l'on fait cesser la liaison entre le bloc-cylindre (54) et l'enveloppe (82) comprenant la paire de flasques (30, 38) ;
un stade où l'on fait tourner le bloc-cylindre (54) par rapport à l'enveloppe (82) comprenant la paire de flasques (30, 38) autour de l'arbre (20) rotatif, le bloc-cylindre étant supporté par une partie (83) permettant une rotation pour supporter le bloc-cylindre (54) à rotation par rapport à l'enveloppe (82) comprenant la paire de flasques (30, 38) et
un stade où l'on effectue un entretien de la machine (8) hydraulique après avoir fait tourner le bloc-cylindre (54).

9. Procédé pour effectuer un entretien sur une machine (8) hydraulique suivant la revendication 8,
dans lequel le bloc-cylindre (54) comprend une pluralité de segments (54a) de bloc-cylindre disposés dans une direction circonférentielle de la machine (8) hydraulique et
dans lequel le stade de rotation comprend la rotation du bloc-cylindre (54), alors que la pluralité de segments (54a) du bloc-cylindre sont fixés et reliés les uns aux autres pour donner une forme annulaire.

10. Procédé pour effectuer un entretien sur une machine (8) hydraulique suivant la revendication 8 ou 9,
dans lequel la machine (8) hydraulique comprend, en outre :
revendications 1 à 3, comprenant, en outre :
une pluralité de canaux (63) pour de l'huile sous haute pression et une pluralité de canaux (64) pour de l'huile sous basse pression formés à l'intérieur du bloc-cylindre (54), de manière à être en communication avec des chambres (53) de travail respectives formées par la pluralité de cylindres (59) et la pluralité de pistons (58) et
une pluralité de conduits (74, 76) pour de l'huile sous basse pression ou au moins une cuve à huile sous basse pression disposée dans la direction circonférentielle d'un côté extérieur radialement ou d'un côté intérieur radialement du bloc-cylindre (54), de manière à être en communication avec les canaux (64) pour de l'huile sous basse pression à l'intérieur du bloc-cylindre (54),
dans lequel le procédé comprend, en outre, un stade de retrait des conduits (74, 76) pour de l'huile sous basse pression ou de la cuve sous basse pression pour mettre le bloc-cylindre (54) à découvert et
dans lequel on fait tourner le bloc-cylindre (54) après l'avoir mis à découvert.

11. Procédé pour effectuer un entretien sur une machine (8) hydraulique suivant la revendication 10,
dans lequel la machine (8) hydraulique comprend une pluralité de segments (52a) de came disposés dans une direction circonférentielle de l'arbre (20) rotatif,
dans lequel le bloc-cylindre (54) comprend une pluralité de segments (54a) de bloc-cylindre disposés dans la direction circonférentielle de la machine (8) hydraulique et
dans lequel le procédé comprend :
un stade de retrait d'au moins l'un de la pluralité de segments (54a) du bloc-cylindre pour mettre les segments (52a) de came à découvert après la mise du bloc-cylindre (54) à découvert et
un stade dans lequel on effectue un entretien des séquences (52a) de came après avoir mis les segments (52a) de came à découvert.

12. Procédé pour effectuer un entretien sur une machine (8) hydraulique suivant la revendication 11,
dans lequel les segments (52a) de came sont reliés à l'arbre (20) rotatif par des boulons (52b) et
dans lequel le procédé comprend un stade de retrait des segments (52a) de came de l'enveloppe (82) comprenant la paire de flasques (30, 38) en retirant les boulons (52b).

13. Procédé pour effectuer un entretien sur une machine (8) hydraulique suivant l'une quelconque des revendications 8 à 12,
dans lequel le stade de rotation comprend :
la liaison d'une corde ou d'un fil (56d) au bloc-cylindre (54) et
le tirage du bloc-cylindre (54) dans une direction sensiblement circonférentielle par l'intermédiaire de la corde ou du fil (56d).

14. Procédé pour effectuer un entretien sur une machine (8) hydraulique suivant la revendication 13,
dans lequel le stade de tirage comprend tirer la corde ou le fil (56d) en utilisant un treuil (56e), une grue ou un vérin.

15. Procédé pour effectuer un entretien sur une machine (8) hydraulique suivant l'une quelconque des revendications 8 à 14,
dans lequel le stade de rotation comprend appliquer une force de rotation autour de l'arbre (20) rotatif au bloc-cylindre (54) en utilisant un engrenage à vis sans fin (56b) et un engrenage (56a) pouvant engrener avec l'engrenage à vis sans fin (56b).
